# EUROPÄISCHE PATENTANMELDUNG

(11) **EP 0 900 955 A1**
(43) Veröffentlichungstag der Anmeldung: **10.03.1999**
(21) Anmeldenummer: 98115956.9
(22) Anmeldetag: 25.08.1998
(51) Int. Cl.: F16H 61/06, F16H 61/12

(54) **Steuereinrichtung mit hydraulischer Rückkopplung für Lastchaltgetriebe**

(30) Priorität: 04.09.1997 US 923565
(71) Anmelder: Deere & Company, Moline, Illinois 61265-8098 (US)
(72) Erfinder: Easton, David Joseph, Cedar Falls, Iowa 50613 (US)
(74) Vertreter: Lau-Loskill, Philipp, Dipl.-Phys.

(57) **Zusammenfassung**

Es wird eine Steuereinrichtung für ein Lastschaltgetriebe (10), welches mehrere hydraulisch ein- und ausrückbare Kupplungspakete (12, 14, 16) aufweist, die dem Umschalten zwischen unterschiedlichen Übersetzungsverhältnissen dienen, beschrieben. Sie enthält mit einer Hydraulikdruckquelle (37) und mit einem Flüssigkeitsreservoir in Verbindung stehende Ventilanordnungen, die je einem Kupplungspaket (12, 14, 16) zugeordnet sind.

Um elektronische Kompensationen der Variablen und die elektronische Erfassung von Rückkopplungsparametern zu vermeiden, wird vorgeschlagen, daß jede Ventilanordnung wenigstens ein Steuerventil (30) und ein Halteventil (32) enthält und daß ein gemeinsamer Steuerdruckverteilungskanal (38) vorgesehen ist. Die Steuerventile (30) steuern den Durchfluß zwischen der Hydraulikdruckquelle (37) und dem Steuerdruckverteilungskanal (38), sowie den Durchfluß zwischen einer Abfrageleitung (56) und dem Steuerdruckverteilungskanal (38) bzw. dem Flüssigkeitsreservoir. Die Halteventile (30) sind in Abhängigkeit des Flüssigkeitsdrucks in der Abfrageleitung (56) einstellbar und steuern den Durchfluß zwischen dem zugehörigen Kupplungspaket und der Hydraulikdruckquelle (37) bzw. dem Flüssigkeitsreservoir.

Das Halteventil (32) und der Steuerdruckverteilungskanal (38) wirken zusammen, um ein Unterdrucksetzen eines der Kupplungspakete (12, 14, 16) zu verhindern, solange nicht alle einzurückenden Kupplungspakete (12, 14, 16) mit Hydraulikflüssigkeit gefüllt sind. Das Steuerventil (30) und das Halteventil (32) wirken desweiteren zusammen, um ausgerückte Kupplungspakete (12, 14, 16) auf dem Druck des Flüssigkeitsreservoirs und eingerückte Kupplungspakete (12, 14, 16) auf dem Hydraulikdruck der Hydraulikdruckquelle (37) zu halten.

## Beschreibung

Die Erfindung betrifft eine Steuereinrichtung für ein Lastschaltgetriebe, welches mehrere hydraulisch steuerbare Kupplungspakete aufweist, die wahlweise ein- und ausrückbar sind, um unterschiedliche Übersetzungsverhältnisse zu ermöglichen. Die Steuereinrichtung enthält mit einer Hydraulikdruckquelle und mit einem Flüssigkeitsreservoir in Verbindung stehende Ventilanordnungen, die je einem Kupplungspaket zugeordnet sind.

Mit Mikroprozessoren bestückte elektronische Steuereinrichtungen für Lastschaltgetriebe, ermöglichen Steuerungsmerkmale, die auf andere Weise praktisch nicht realisierbar sind. Es ist bei elektronisch gesteuerten Getrieben jedoch schwierig, Umschaltungen von hoher Qualität zu erzielen. Da die Koordination mehrerer Kupplungselemente schwierig ist, erforderten elektronisch gesteuerte Lastschaltgetriebe bisher beträchtliche, zeitraubende und teure Feinabstimmungen, um eine zufriedenstellende Gesamtschaltqualität bereitzustellen. Dies liegt daran, daß die Mikroprozessoren oder hydraulischen Ventile, die das Getriebe steuern, keine ausreichenden Informationen (Feedback) über das tatsächliche Geschehen innerhalb des Getriebes erhalten.

Bei einem mikroprozessorunterstützten Steuersystem für ein Lastschaltgetriebe erzeugt der Mikroprozessor zeitabhängige elektrische Signale hoher Genauigkeit und Wiederholbarkeit. Jedoch reagieren die hydraulisch betätigten Getriebekomponenten unmittelbar nur auf die hydraulischen Drücke, die von Ventilen erzeugt werden, welche ihrerseits durch die Elektronik gesteuert werden. Die elektrischen Signale werden so eingestellt, daß sie nach einer Serie von Ereignissen die richtigen Druckausgangssignale für einen Schaltzustand erzeugen. Jedoch können Änderungen der Temperatur, des Luft-/Öl-Gemischs, des Reibungswiderstandes von Dichtungen, des Ventilstellfaktors, der Motordrehzahl und vieler weiterer Variablen die erzeugten hydraulischen Drücke verändern, was möglicher Weise einen rauhen Gangwechsel zur Folge hat. Es stehen Steuersysteme zur Verfügung, bei denen dem elektronischen Kontroller elektronische Signale zugeführt werden, die diesen Variablen entsprechen. Jedoch waren auch diese Systeme nicht in der Lage unter allen Bedingungen Qualitätsumschaltungen zu gewährleisten. Für die Lösung dieser Probleme ist wegen der damit verbundenen hohen Kosten und der gegebenen Komplexität die Verwendung einer elektronischen Rückkopplung von Parameterwerten, wie beispielsweise die Kupplungskolbenposition, der tatsächlich am Kolben anstehende Druck oder die tatsächliche auf die Kupplungsscheiben wirkende Kraft, nicht praktikabel. Es ist daher wünschenswert ein Steuersystem zu haben, welches zufriedenstellende Schalteigenschaften liefert und welches keine umfangreiche elektronisch variable Meßwerterfassung, insbesondere die elektronische Erfassung solcher Rückkopplungsparameter erfordert.

Die der Erfindung zugrunde liegende Aufgabe wird darin gesehen, eine Steuereinrichtung für ein elektronisch gesteuertes, hydraulisch betätigtes Lastschaltgetriebe der eingangs genannten Art bereitzustellen, welches keine umfangreiche elektronische Kompensation der Variablen und keine elektronische Erfassung von Rückkopplungsparametern erfordert.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Steuereinrichtung ist bestimmt für ein Lastschaltgetriebe, welches mehrere hydraulisch betätigte Kupplungspakete enthält, die wahlweise einrückbar oder ausrückbar sind, um verschiedene Übersetzungsverhältnisse einzustellen. Der Steuerkreis enthält mit einer Hydraulikdruckquelle und mit einem Flüssigkeitsreservoir in Verbindung stehende Ventilanordnungen, die je einem Kupplungspaket zugeordnet sind und mit diesem hydraulisch in Verbindung stehen. Erfindungsgemäß enthält jede Ventilanordnung wenigstens ein Steuerventil, ein Halteventil und einen gemeinsamen Steuerdruckverteilungskanal. Jedes Steuerventil steht mit der Hydraulikdruckquelle, dem Flüssigkeitsreservoir und dem Steuerdruckverteilungskanal in Verbindung. Es steuert den Durchfluß zwischen der Hydraulikdruckquelle und dem Steuerdruckverteilungskanal, den Durchfluß zwischen dem Halteventil und dem Steuerdruckverteilungskanal bzw. dem Flüssigkeitsreservoir und vorzugsweise den Durchfluß zwischen dem Steuerdruckverteilungskanal und dem zugehörigen Kupplungspaket. Jedes Halteventil steuert den Durchfluß zwischen dem zugehörigen Kupplungspaket und der Hydraulikdruckquelle bzw. dem Flüssigkeitsreservoir. Die Position des Halteventils hängt von einem von dem Steuerventil bereitgestellten Flüssigkeitsdruck und vorzugsweise von dem Druck in dem zugehörigen Kupplungspaket ab. Das Halteventil und der Steuerdruckverteilungskanal wirken vorzugsweise zusammen, um ein Unterdrucksetzen eines der Kupplungspakete zu verhindern, solange nicht alle einzurückenden Kupplungspakete mit Hydraulikflüssigkeit gefüllt sind. Das Steuerventil und das Halteventil wirken desweiteren zusammen, um ausgerückte Kupplungspakete auf dem Druck des Flüssigkeitsreservoirs zu halten und eingerückte Kupplungspakete auf dem Hydraulikdruck der Hydraulikdruckquelle zu halten.

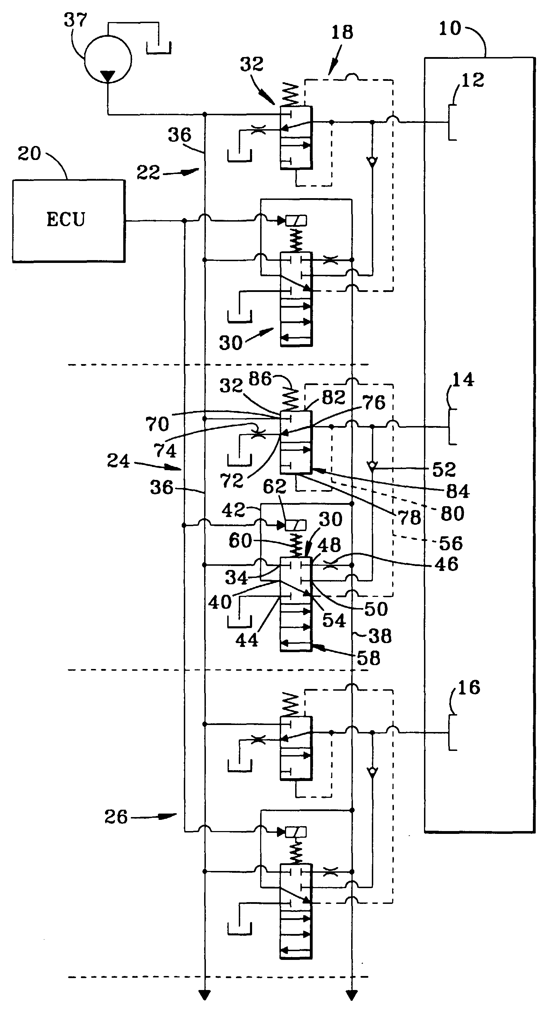

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt das schematische Diagramm eines Steuersystems für ein Lastschaltgetriebe 10 mit einem erfindungsgemäßen Steuerkreis 18. Das Lastschaltgetriebe 10 enthält mehrere Kupplungspakete (von denen zur Erläuterung drei angedeutet sind) 12, 14, 16, welche durch einen elektrohydraulischen Steuerkreis 18 angesteuert werden, um verschiedene Übersetzungsverhältnisse des Lastschaltgetriebes 10 einzurücken oder auszurücken. Der Steuerkreis 18 wird durch Signale einer elektronischen Steuereinheit (ECU) 20, die beispielsweise Mikroprozessoren enthält, angesteuert. Bei dem Getriebe 10 kann es sich um ein im Handel erhältliches Lastschaltgetriebe mit einer gesonderten Kupplung im Antriebsstrang oder mit einer ausgewählten inneren Kupplung, die als Antriebsstrangkupplung dient, handeln.

Der Steuerkreis 18 enthält mehrere im wesentlichen gleiche Ventileinheiten 22, 24, 26, eine für jedes Kupplungspaket 12, 14, 16. Die Ventileinheit 24 wird im folgenden näher beschrieben. Sie enthält ein elektromagnetisch betätigbares Steuerventil 30 und ein Halteventil 32. Das Steuerventil 30 hat einen ersten Anschluß 34, der mit einem an den Systemdruck einer Pumpe 37 angeschlossenen Druckverteilerkanal 36 verbunden ist. Ein Steuerdruckverteilungskanal 38 ist über eine Leitung 42 mit einem zweiten Anschluß 40 des Steuerventils 30 verbunden. Ein dritter Anschluß 44 des Steuerventils 30 steht mit dem Sumpf oder Druckmittelreservoir in Verbindung. Der Steuerdruckverteilungskanal 38 ist über eine Verengung oder Drosselstelle 46 mit einem vierten Anschluß 48 des Steuerventils 30 verbunden. Ein fünfter Anschluß 50 steht über ein Rückschlagventil 52, welches nur eine einseitige Durchströmung von dem fünften Anschluß 50 zu dem Kupplungspaket 14 erlaubt, mit dem zugehörigen Kupplungspaket 14 in Verbindung. Ein sechster Anschluß 54 ist über eine Abfrageleitung 56 mit einem Anschluß des Halteventils 32 verbunden. Das Steuerventil 30 enthält einen Steuerventilschieber 58, der durch eine Feder 60 in eine erste (dargestellte) Position gedrängt wird, in der die Anschlüsse 34, 44, 48 und 50 blockiert sind und die Anschlüsse 40 und 54 miteinander verbunden sind. Eine Magnetspule 62 ist erregbar, um den Schieber 58 in eine zweite Position zu bewegen, in der der Anschluß 34 mit dem Anschluß 48, der Anschluß 40 mit dem Anschluß 50 und der Anschluß 54 mit dem Anschluß 44 verbunden werden.

Das Halteventil 32 enthält einen ersten Anschluß 70, der mit dem Druckverteilungskanal 36 verbunden ist, einen zweiten Anschluß 72, der über eine Verengung oder Drosselstelle 74 mit dem Sumpf verbunden ist, einen dritten Anschluß 76, der mit dem Kupplungspaket 14 verbunden ist, einen vierten Anschluß 78, der über eine Abfrageleitung 80 mit dem Kupplungspaket 14 verbunden ist, und einen fünften Anschluß 82, der über die Abfrageleitung 56 mit dem sechsten Anschluß 54 des Steuerventils 30 verbunden ist. Damit wird der an dem Kupplungspaket 14 anstehende Druck über die Abfrageleitung 80 an den vierten Anschluß 78 rückgemeldet. Das Halteventil 32 enthält einen Halteventilschieber 84, der durch eine Feder 86 in eine erste (dargestellte) Position gedrängt wird, in der der erste Anschluß 70 gesperrt ist und in der der dritte Anschluß 76 mit dem zweiten Anschluß 72 verbunden ist. Der Schieber 84 ist in Abhängigkeit des am vierten Anschluß 78 anstehenden Drucks in eine zweite Position verschiebbar, in der der zweite Anschluß 72 blockiert ist und der erste Anschluß 70 mit dem dritten Anschluß 76 verbunden ist, so daß der Systemdruck an das Kupplungspaket 14 geleitet wird.

### Betriebsweise

Der Druckverteilungskanal 36 liefert druckregulierte Hydraulikflüssigkeit von der Pumpe 37 an die Steuerventile 30 und die Halteventile 32 jeder Ventileinheit 22, 24, 26, die den Kupplungspaketen 12, 14, 16 zugeordnet sind. Die Druckrückmeldung über die Abfrageleitung 80 an den vierten Anschluß 78 jedes Halteventils 32 hält jedes nicht eingerückte (nicht unter Druck gesetzte) Kupplungspaket, dessen zugehöriges Steuerventil 30 sich in seiner ersten Position befindet, auf dem Druck des Sumpfs und jedes eingerückte (unter Druck gesetzte) Kupplungspaket, dessen zugehöriges Steuerventil 30 sich in seiner zweiten Position befindet, auf dem Systemdruck.

Soll eine Umschaltung des Getriebes 10 erfolgen, so erregt die ECU 20 simultan die Magnetspulen 62 aller Steuerventile 30, die den Kupplungspaketen zugeordnet sind, welche für den neuen geforderten Gang unter Druck gesetzt und eingerückt werden müssen (ausgewählte Kupplungspakete). Diese erregten Steuerventile 30 bewegen sich, wie oben beschrieben, in ihre zweite Position. Dabei wird Druckflüssigkeit von dem Druckverteilungskanal 36 über die Anschlüsse 34 und 48 in den Steuerdruckverteilungskanal 38 und Flüssigkeit von dem Steuerdruckverteilungskanal 38 über die Anschlüsse 40 und 50 und das Rückschlagventil 52 an jedes zugehörige Kupplungspaket geleitet. Damit fließt Flüssigkeit in die ausgewählten Kupplungspakete, die nacheinander gefüllt werden.

Der Steuerdruckverteilungskanal 38 gleicht den Druck zwischen allen ausgewählten Kupplungspaketen aus, so daR keines voll unter Druck gesetzt wird, bevor alle gefüllt sind. Die Drosselstelle 46 begrenzt die Nachflußgeschwindigkeit der Druckflüssigkeit aus dem Druckverteilungskanal 36 und ermöglicht damit einen Druckausgleich in dem Steuerdruckverteilungskanal 38. Wenn alle ausgewählten Kupplungspakete gefüllt sind und kein zusätzliches zu füllendes Volumen vorhanden ist, steigt der Druck in dem Steuerdruckverteilungskanal 38 schnell an und alle ausgewählten Kupplungspakete beginnen einzugreifen und Drehmomente zu übertragen. Bei den Halteventilen 32, die sich bisher in ihrer ersten Position befanden, begrenzt die Drosselstelle 74 den Flüssigkeitsabfluß in den Sumpf, so daß der Druck weiter ansteigen kann. Schließlich reicht der Druck an dem vierten Anschluß 78 des Halteventils 32, der gleich dem Druck in dem zugehörigen Kupplungspaket ist, aus, um eine Umschaltung des Halteventils 32 in seine zweite Position vorzunehmen.

Ein Flüssigkeitsrückfluß von dem Kupplungspaket in den Steuerdruckverteilungskanal 38 wird durch das Rückschlagventil 52 verhindert. Halteventile 32 von ausgewählten Kupplungspaketen, die sich bereits in ihrer zweiten Position befanden oder die aufgrund des Druckanstiegs in die zweite Position übergegangen sind, behalten diese zweite Position bei.

Da die Magnetspulen 62 der Steuerventile 30 für die Kupplungspakete, die für den neuen Gang nicht benötigt werden, nicht erregt werden, leiten diese nicht erregten Steuerventile 30 Flüssigkeit von dem Steuerdruckverteilungskanal 38 über die Anschlüsse 40 und 54 und die Abfrageleitung 56 zu dem fünften Anschluß 82 des zugehörigen Halteventils 32. Für jedes nicht eingerückte Kupplungspaket gleicht der schnell ansteigende Druck an dem Anschluß 82 den am Anschluß 78 des gegenüberliegenden Endes des Schiebers 84 wirkenden Kupplungspaketdruck aus, und die Feder 86 bewegt das Halteventil 32 in seine erste Position (sofern es nicht bereits in dieser ersten Position war), in der das zugehörige Kupplungspaket über die Anschlüsse 76 und 72 mit dem Sumpf verbunden wird, so daß das zugehörige Kupplungspaket ausgerückt wird. Für jedes Kupplungspaket, das bereits ausgerückt war, bewirkt der Druck des Steuerdruckverteilungskanals 56 am Anschluß 82 des zugehörigen Halteventils 32 nichts, weil sich das Halteventil 32 bereits in seiner ersten Position befindet.

Sobald die Umschaltung abgeschlossen ist, werden die Magnetspulen 62 abgeschaltet, und für jedes Kupplungspaket wird durch sein zugehöriges Halteventil 32 der eingestellte Druckzustand oder der drucklose Zustand aufrechterhalten. Damit wird die Koordination der einkuppelnden und auskuppelnden Kupplungen mit hydraulischer Rückkopplung gesteuert, und die ECU 20 braucht lediglich auszuwählen welche Kupplungspakete eingerückt bzw. ausgerückt werden sollen.

Da der hydraulische Rückkopplungsdruck an den Halteventilen 32 ansteht, rücken auszukuppelnde Kupplungspakete so lange nicht aus, bis alle einzukuppelnden Kupplungspakete bereit sind, Drehmomente zu übertragen, selbst wenn dies einige Sekunden in Anspruch nehmen sollte. Sobald alle ausgewählten Kupplungspakete gefüllt und bereit sind, erfolgt die Umschaltung aller Kupplungspakete, die ihren Eingriffszustand infolge der Übersetzungsumschaltung ändern müssen, sehr schnell, weil hierbei lediglich eine kleine zusätzliche Flüssigkeitsmenge benötigt wird. Daher erfolgt die Umschaltung, ohne daß die Drehmomentübertragung des Getriebes unterbrochen wird.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Steuereinrichtung für ein Lastschaltgetriebe (10), welches mehrere hydraulisch steuerbare Kupplungspakete (12, 14, 16) aufweist, die wahlweise ein- und ausrückbar sind, um unterschiedliche Übersetzungsverhältnisse zu ermöglichen, und welche mit einer Hydraulikdruckquelle (37) sowie mit einem Flüssigkeitsreservoir in Verbindung stehende Ventilanordnungen, die je einem Kupplungspaket (12, 14, 16) zugeordnet sind, aufweist, dadurch gekennzeichnet, daß
- jede Ventilanordnung wenigstens ein Steuerventil (30) und ein Halteventil (32) enthält und daß ein gemeinsamer Steuerdruckverteilungskanal (38) vorgesehen ist,
- wobei jedes Steuerventil (30) den Durchfluß zwischen der Hydraulikdruckquelle (37) und dem Steuerdruckverteilungskanal (38), sowie den Durchfluß zwischen einer Abfrageleitung (56) und dem Steuerdruckverteilungskanal (38) bzw. dem Flüssigkeitsreservoir steuert und
- wobei jedes Halteventil (30) in Abhängigkeit des Flüssigkeitsdrucks in der Abfrageleitung (56) einstellbar ist und den Durchfluß zwischen dem zugehörigen Kupplungspaket und der Hydraulikdruckquelle (37) bzw. dem Flüssigkeitsreservoir steuert.

2. Steuereinrichtung nach Anspruch 1, dadurch gekennzeichnet, daß das Steuerventil (30) den Durchfluß zwischen dem Steuerdruckverteilungskanal (38) und dem zugehörigen Kupplungspaket (12, 14, 16) steuert.

3. Steuereinrichtung nach Anspruch 1 oder 2, dadurch gekennzeichnet, das Halteventil (32) in Abhängigkeit des in dem zugehörigen Kupplungspaket (12, 14, 16) herrschenden Flüssigkeitsdruck und eines von dem zugehörigen Steuerventil (30) bereitgestellten Flüssigkeitsdrucks einstellbar ist.

4. Steuereinrichtung nach einem der Ansprüche 1 bis 3, dadurch gekennzeichnet, daß das Steuerventil (30), das Halteventil (32) und der Steuerdruckverteilungskanal (38) zusammenwirken, um ein Unterdrucksetzen eines der Kupplungspakete (12, 14, 16) zu verhindern, solange nicht alle einzurückenden Kupplungspakete (12, 14, 16) mit Hydraulikflüssigkeit gefüllt sind.

5. Steuereinrichtung nach einem der Ansprüche 1 bis 4, dadurch gekennzeichnet, daß das Steuerventil (30) und das Halteventil (32) zusammenwirken, um ausgerückte Kupplungspakete (12, 14, 16) auf dem Druck des Flüssigkeitsreservoirs und eingerückte Kupplungspakete auf dem Hydraulikdruck der Hydraulikdruckquelle (37) zu halten.

6. Steuereinrichtung nach einem der Ansprüche 1 bis 5, dadurch gekennzeichnet, daß jedes mit einem ausgerückten Kupplungspaket (12, 14, 16) in Verbindung stehende Halteventil (32) durch ein von dem Steuerventil (30) geliefertes Drucksignal in einer Position gehalten wird, in der das Halteventil (32) das Kupplungspaket (12, 14, 16) mit dem Flüssigkeitsreservoir verbindet, und daß jedes mit einem eingerückten Kupplungspaket (12, 14, 16) in Verbindung stehende Halteventil (32) durch ein von dem Steuerventil (30) geliefertes Drucksignal in einer Position gehalten wird, in der das Halteventil (32) das Kupplungspaket (12, 14, 16) mit einer Hydraulikdruckquelle (37) verbindet.

7. Steuereinrichtung nach einem der Ansprüche 1 bis 6 gekennzeichnet durch ein Steuerventil (30) mit:
- einem mit der Hydraulikdruckquelle (37) verbundenen ersten Anschluß (34),
- einem mit dem Steuerdruckverteilungskanal (38) verbundenen zweiten Anschluß (40),
- einem mit dem Flüssigkeitsreservoir verbundenen dritten Anschluß (44),
- einem mit dem Steuerdruckverteilungskanal (38) über eine Drosselstelle (46) verbundenen vierten Anschluß (48),
- einem mit dem zugehörigen Kupplungspaket (12, 14, 16) verbundenen fünften Anschluß (50),
- einem mit dem zugehörigen Halteventil (32) verbundenen sechsten Anschluß (54),
- einem Schieber (58), der zwischen einer ersten Position, in der der erste, dritte, vierte und fünfte Anschluß (34, 44, 48, 50) blockiert sind und der zweite Anschluß (40) mit dem sechsten Anschluß (54) verbunden ist, und einer zweiten Position verschiebbar ist, in der der erste Anschluß (34) mit dem vierten Anschluß (48), der zweite Anschluß (40) mit dem fünften Anschluß (50) und der sechste Anschluß (54) mit dem dritten Anschluß (44) verbunden sind,
- einer Feder (60), die das Steuerventil (30) in seine erste Position drängt, und
- eine Magnetspule (62), die im erregten Zustand das Steuerventil (30) in seine zweite Position verschiebt.

8. Steuereinrichtung nach Anspruch 7, dadurch gekennzeichnet, daß der fünfte Anschluß (50) mit dem zugehörigen Kupplungspaket (12, 14, 16) über ein Rückschlagventil (52) in Verbindung steht, welches lediglich einen einseitigen Flüssigkeitsdurchfluß von dem fünften Anschluß (50) zu dem Kupplungspaket (12, 14, 16) erlaubt.

9. Steuereinrichtung nach einem der Ansprüche 1 bis 8, gekennzeichnet durch ein Halteventil (32) mit
- einem mit der Hydraulikdruckquelle (37) verbundenen ersten Anschluß (70),
- einem mit dem Flüssigkeitsreservoir verbundenen zweiten Anschluß (72),
- einem mit dem zugehörigen Kupplungspaket (12, 14, 16) verbundenen dritten Anschluß (76),
- einem mit dem zugehörigen Kupplungspaket (12, 14, 16) verbundenen vierten Anschluß (78),
- einem mit dem zugehörigen Steuerventil (30) verbundenen fünften Anschluß (82),
- einem Halteventilschieber (84), der zwischen einer ersten Position, in der der erste Anschluß (70) blockiert ist und der dritte Anschluß (76) mit dem zweiten Anschluß (72) verbunden ist, und einer zweiten Position verschiebbar ist, in der der erste Anschluß (70) mit dem dritten Anschluß (76) verbunden ist und der zweite Anschluß (72) blockiert ist, und
- einer Feder (86), die den Schieber (84) in seine erste Position drängt, wobei der Schieber (84) in Abhängigkeit des Flüssigkeitsdrucks in dem vierten Anschluß (78) in seine zweite Position verschiebbar ist.

10. Steuereinrichtung nach Anspruch 9, dadurch gekennzeichnet, daß der zweite Anschluß (72) über eine Drosselstelle (74) mit dem Flüssigkeitsreservoir verbunden ist.

11. Steuereinrichtung nach Anspruch 9 oder 10, dadurch gekennzeichnet, daß der Halteventilschieber (84) in Abhängigkeit der Flüssigkeitdrücke im vierten und fünften Anschluß (78, 82) zwischen seiner ersten und zweiten Position verschiebbar ist.
